# EUROPEAN PATENT APPLICATION

(11) **EP 4 249 308 A1**
(43) Date of publication of application: **27.09.2023**
(21) Application number: 23162122.8
(22) Date of filing: 15.03.2023
(51) Int. Cl.: B60K 35/00

(54) **DISPLAY DEVICE FOR VEHICLE**

(30) Priority: 22.03.2022 JP 2022045226
(71) Applicant: STANLEY ELECTRIC CO., LTD., Tokyo 153-8636 (JP)
(72) Inventor: OKABE, Reoya, Tokyo, 153-8636 (JP); WATANABE, Masashi, Tokyo, 153-8636 (JP); YAMAMOTO, Tomoyuki, Tokyo, 153-8636 (JP); TAKECHI, Daisuke, Tokyo, 153-8636 (JP)
(74) Representative: Klang, Alexander H.

(57) **Abstract**

Alight guide body (30) has first and second incidence parts (31a, 31b) configured to cause light (L) emitted from first and second light sources (2a, 2b) to enter a light guide part (3a), first and second reflection parts (34a, 34b) that are disposed on both facing side surfaces of a light guide part (3b) and that are configured to reflect light (L) entering from the first incidence part (31a) and light (L) entering from the second incidence part (31b) in facing directions with respect to each other, a plurality of reflection cuts that are disposed on a back face side of the light guide part (3b) and that are configured to reflect the light (L) reflected by the first and second reflection parts (34a, 34b) toward a front side of the light guide part (3b), and a light emission part (36) that is disposed in the front side of the light guide part (3b) and that is configured to emit light in a shape corresponding to a display pattern formed by the plurality of reflection cuts by emitting the light (L) reflected by the plurality of reflection cuts to outside.

## Description

### BACKGROUND OF THE INVENTION

### Field of the Invention

The present invention relates to a display device for a vehicle.

### Description of Related Art

In the related art, as a display device for a vehicle mounted on a vehicle, a configuration in which a light source such as a light emitting diode (LED) or the like and a light guide body such as an inner lens (light guide lens) or the like are combined is known (for example, see Japanese Unexamined Patent Application, First Publication No. 2006-221073). In such a display device for a vehicle, due to diversification of designs, various forms have been developed.

For example, Japanese Unexamined Patent Application, First Publication No. 2006-221073 discloses an illumination plate for a vehicle that includes a housing constituted by a base having sidewalls on four sides and a cover lens attached to ends of the sidewalls of the base, a light source disposed on the sidewall of the housing, a light guide body that faces the light source and is accommodated in the housing and configured to diffuse light from the light source in the housing and illuminate a cover lens with the light, and a light diffusion and reflection part disposed on a back surface of the light guide body, that 3-dimensionally forms a specified display section for such as characters, marks, or the like on a back surface of the cover lens, and in which light diffusion processing is performed on the specified display sections.

### SUMMARY OF THE INVENTION

Incidentally, in the above-mentioned illumination plate for a vehicle disclosed in Japanese Unexamined Patent Application, First Publication No. 2006-221073, for example, when hollow display patterns such as A, B, D, O, P, Q, R, 6, 8, 9, 0, and the like, are displayed, a hole portion passing through the light guide body is formed inside the display pattern. In this case, since light cannot be guided inside the hole portion, it is difficult to make such hollow display patterns emit light uniformly.

An aspect of the present invention is directed to providing a display device for a vehicle capable of more uniformly emitting light with display patterns.

An aspect of the present invention provides the following configurations.
(1) A display device for a vehicle including:
   a light source part including a first light source and a second light source; and
   a light guide body including a light guide part configured to guide light emitted from the first light source and the second light source,
   wherein the light guide body has a first incidence part and a second incidence part that are disposed to face the first light source and the second light source, respectively, and that are configured to cause the light emitted from the first light source and the second light source to enter the light guide part,
   a first reflection part and a second reflection part that are disposed on both side surfaces facing each other in a direction perpendicular to the first incidence part and the second incidence part of the light guide part and that are configured to reflect light entering from the first incidence part and light entering from the second incidence part in facing directions with respect to each other,
   a plurality of reflection cuts that are disposed on a back face side of the light guide part and that are configured to reflect the light reflected by the first reflection part and the second reflection part toward a front side of the light guide part, and
   a light emission part that is disposed in the front side of the light guide part and that is configured to emit light in a shape corresponding to a display pattern formed by the plurality of reflection cuts by emitting the light reflected by the plurality of reflection cuts to outside.
(2) The display device for a vehicle according to the above-mentioned (1), wherein the light emission part is constituted by an end surface of a protrusion in which a part of the front side of the light guide part is protruding forward in a shape corresponding to the display pattern.
(3) The display device for a vehicle according to the above-mentioned (1), including a bezel that is disposed at the front side of the light guide body and that is configured to cover surroundings of the light emission part.
(4) The display device for a vehicle according to the above-mentioned (2), including a first bezel member that is disposed at the front side of the light guide body and that is configured to cover surroundings of the protrusion.
(5) The display device for a vehicle according to the above-mentioned (2) or (4), wherein the light guide part has a hole portion at inside the protrusion.
(6) The display device for a vehicle according to the above-mentioned (5), including a second bezel member that is disposed on a back face side of the light guide body and that is configured to cover inside of the hole portion.
(7) The display device for a vehicle according to any one of the above-mentioned (1) to (6), including a display area constituted by arranging the plurality of display patterns in one direction, wherein the display area includes a plurality of light emitting units including the light source parts and the light guide bodies corresponding to each of the display patterns,
wherein the plurality of light emitting units are arranged in the one direction and have a structure in which the light guide bodies disposed next to each other are connected.

According to the aspect of the present invention, it is possible to provide the display device for a vehicle capable of more uniformly emitting light in a display pattern.

### BRIEF DESCRIPTION OF THE DRAWINGS

FIG. 1 is a perspective view showing an appearance of a display device for a vehicle according to an embodiment of the present invention.
FIG. 2 is an exploded perspective view showing a configuration of the display device for a vehicle shown in FIG. 1.
FIG. 3 is a front view showing a display pattern corresponding to "O" in a display area displayed by the display device for a vehicle shown in FIG. 1.
FIG. 4 is a cross-sectional view of the display device for a vehicle along a line segment IV-IV shown in FIG. 3.
FIG. 5 is a perspective view of a light emitting unit corresponding to the display pattern of "O" shown in FIG. 3 when seen from a front side.
FIG. 6 is a front view showing a configuration of a light emitting unit corresponding to the display pattern of "O" shown in FIG. 3.
FIG. 7 is a cross-sectional view of a light guide body along a line segment VII-VII shown in FIG. 6.
FIG. 8 is a cross-sectional view of the light guide body along a line segment VIII-VIII shown in FIG. 6.
FIG. 9 is a perspective view showing the light guide body shown in FIG. 6 when seen from a back face side.

### DETAILED DESCRIPTION OF THE INVENTION

Hereinafter, an embodiment of the present invention will be described in detail with reference to the accompanying drawings.

Further, in the drawings used in the following description, a scale of dimensions may vary depending on components in order to make each component easier to see, and dimensional ratios of each component may not necessarily be the same as the actual ones.

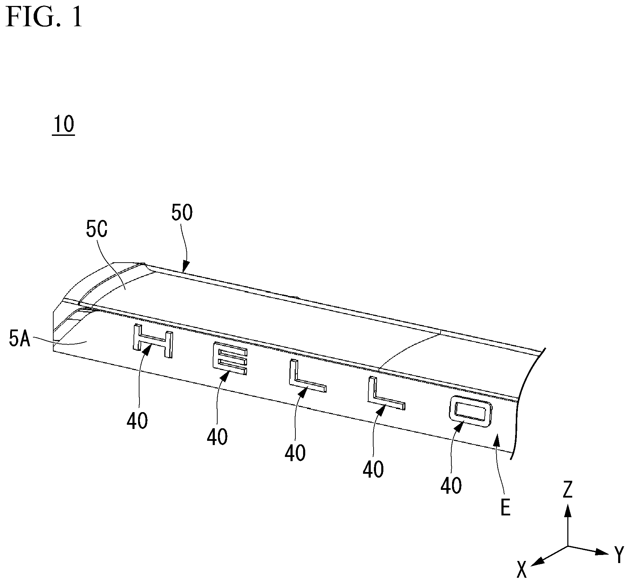

As an embodiment of the present invention, for example, a display device 10 for a vehicle shown in FIG. 1 to FIG. 9 will be described.

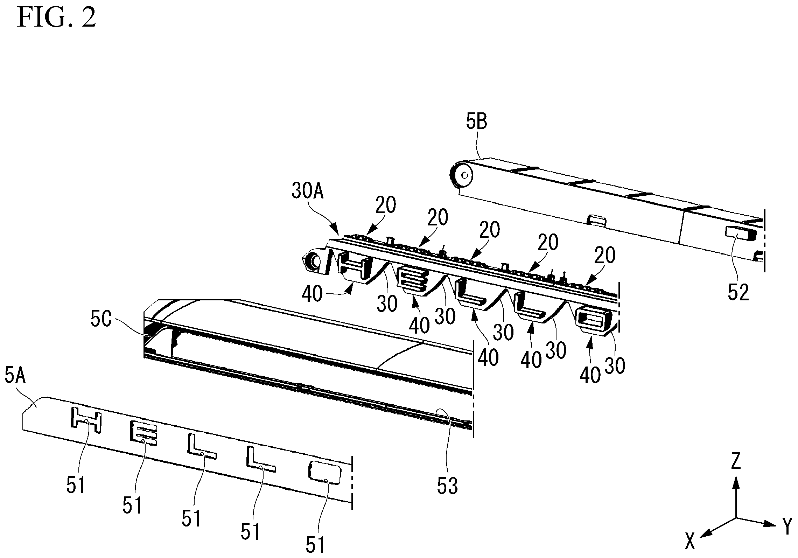

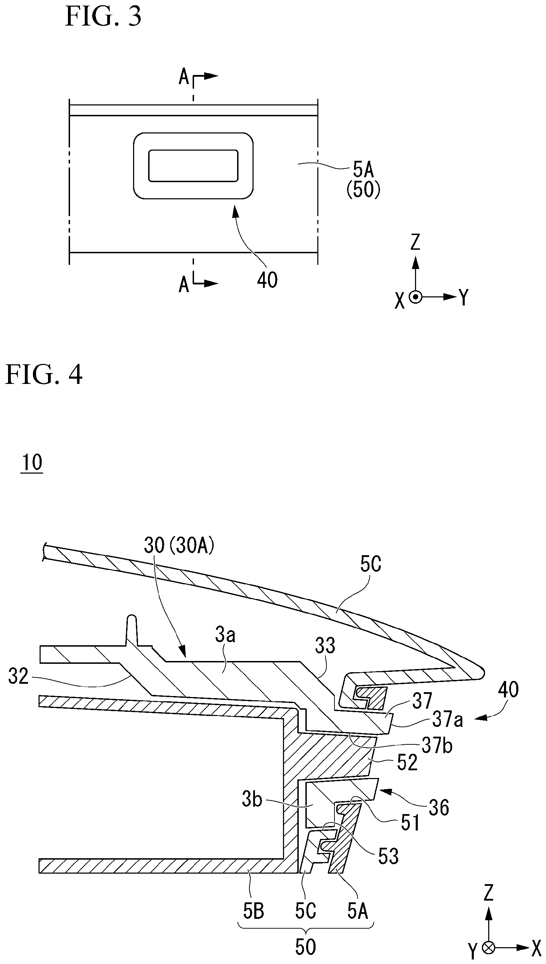

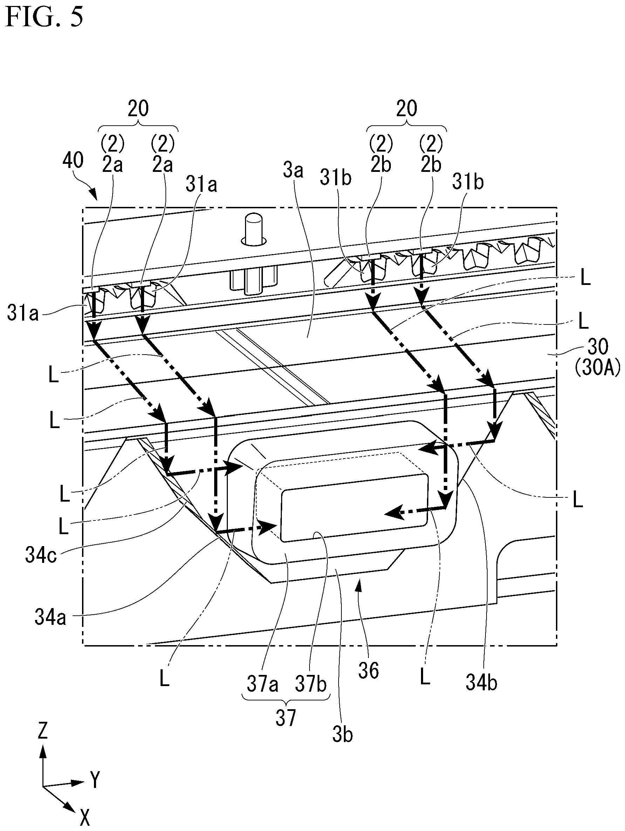

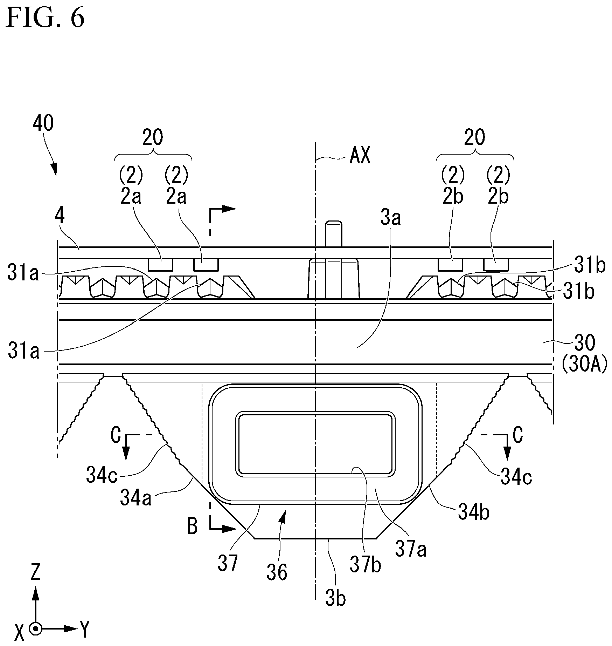

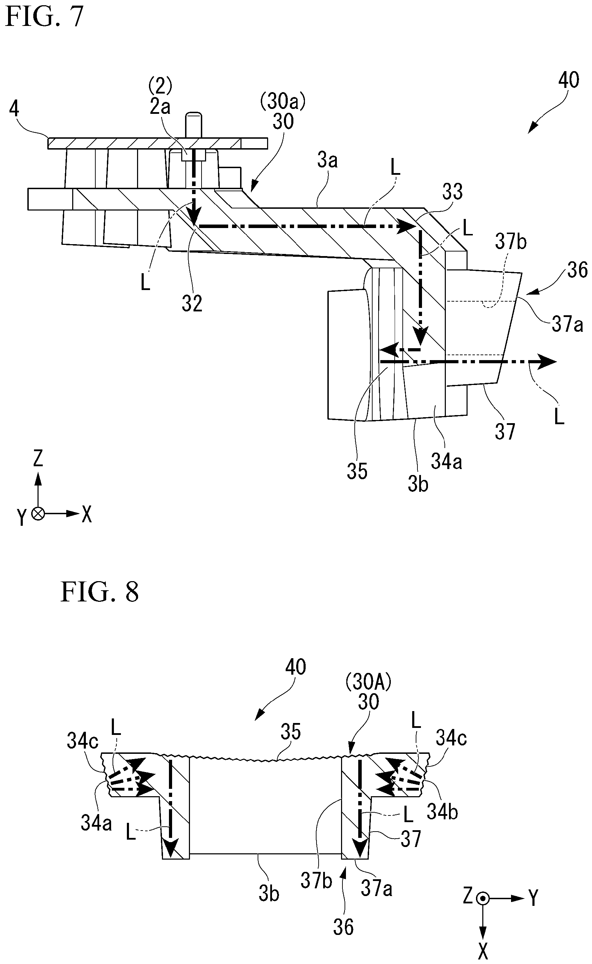

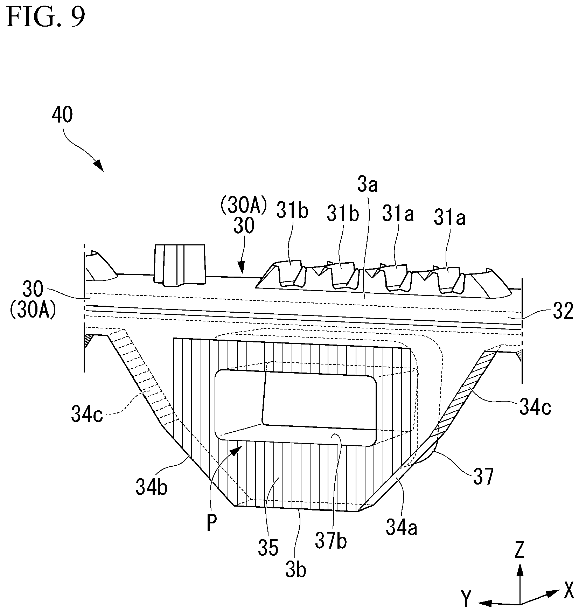

Further, FIG. 1 is a perspective view showing appearance of the display device 10 for a vehicle. FIG. 2 is an exploded perspective view showing a configuration of the display device 10 for a vehicle. FIG. 3 is a front view showing a display pattern corresponding to "O" in a display area E displayed by the display device 10 for a vehicle. FIG. 4 is a cross-sectional view of the display device 10 for a vehicle along a line segment IV-IV shown in FIG. 3. FIG. 5 is a perspective view showing a light emitting unit 40 corresponding to the display pattern of "O" when seen from a front side. FIG. 6 is a front view showing a configuration of the light emitting unit 40 corresponding to the display pattern of "O." FIG. 7 is a cross-sectional view of a light guide body 30 along a line segment V 11- V11 shown in FIG. 6. FIG. 8 is a cross-sectional view of the light guide body 30 along a line segment VIII-VIII shown in FIG. 6. FIG. 9 is a perspective view of the light guide body 30 shown in FIG. 6 when seen from a back face side.

In addition, in the drawings as described below, an XYZ orthogonal coordinate system is set, an X-axis direction designates a forward/rearward direction (lengthwise direction) of the display device 10 for a vehicle, a Y-axis direction indicates a leftward/rightward direction (widthwise direction) of the display device 10 for a vehicle, and a Z-axis direction indicates an upward/downward direction (height direction) of the display device 10 for a vehicle.

The display device 10 for a vehicle of the embodiment is mounted on, for example, a back gate or a trunk lid on a rear side of the vehicle, and a brand name such as a vehicle name, a maker name, or the like, is displayed as a display pattern through light emission. Further, in the display device 10 for a vehicle of the embodiment, a case in which a display pattern of 5 characters of "HELLO" as shown in FIG. 1 is displayed is exemplified.

The display device 10 for a vehicle of the embodiment includes the display area E in which a plurality of (in the embodiment, five) display patterns (HELLO) are aligned in one direction (in the embodiment, a leftward/rightward direction), and the plurality of display patterns (HELLO) in the display area E are displayed through light emission.

Specifically, as shown in FIG. 1 and FIG. 2, the display device 10 for a vehicle includes the plurality of (in the embodiment, five) light emitting units 40 each including a light source part 20 and the light guide body 30, and the plurality of light emitting units 40 have a structure accommodated inside a bezel 50.

The plurality of light emitting units 40 have a structure disposed in one direction next to each other and in which adjacent ones of the light guide bodies 30 are connected. That is, the light guide bodies 30 that constitute each of the light emitting units 40 constitute one inner lens (lens coupling body) 30A in which adjacent bodies are connected to each other. Meanwhile, the light source part 20 that constitutes each of the light emitting units 40 is provided so as to correspond to each of the light guide bodies 30.

The plurality of light emitting units 40 are provided to correspond to the plurality of display patterns (HELLO), respectively. The light emitting units 40 have basically the same configuration except that the display patterns displayed by these are different from each other.

Among the plurality of display patterns (HELLO), the display pattern corresponding to "O" is an hollow display pattern in which a hole portion is formed. The present invention is appropriately used in a case in which such hollow display patterns are displayed. Accordingly, in the embodiment, a configuration of each of the light emitting units 40 will be described in detail focusing on the light emitting unit 40 corresponding to the display pattern of "O."

As shown in FIG. 3 to FIG. 9, the light emitting unit 40 includes the light source part 20 including a first light source 2a and a second light source 2b, and the light guide body 30 including a first light guide part 3a and a second light guide part 3b, which are configured to guide light L emitted from the first light source 2a and the second light source 2b.

The first light source 2a and the second light source 2b are disposed symmetrically on both sides while having a center axis AX in another direction (in the embodiment, the upward/downward direction) perpendicular to one direction (in the embodiment, the leftward/rightward direction) of the light guide body 30 interposed therebetween.

The first light source 2a and the second light source 2b are constituted by at least one or more light emitting elements 2. In the embodiment, two light emitting elements 2 are disposed with respect to each of the first light source 2a and the second light source 2b in a state in which the two light emitting elements 2 are arranged in one direction while being adjacent to each other. That is, four light emitting elements 2 are disposed with respect to the one light guide body 30.

Further, the number of the light emitting elements 2 disposed is not limited to the configuration in which two of the light emitting elements 2 are arranged for each of the first light source 2a and the second light source 2b, and an arrangement may be a configuration in which the light emitting elements 2 is disposed one by one or may be appropriately changed according to a size or the like of the display pattern.

The light emitting elements 2 are constituted by, for example, LEDs configured to emit red light, and are mounted on a side of one surface (in the embodiment, a lower surface) of a circuit board 4 on which a driving circuit configured to drive the LEDs is provided. Accordingly, the light emitting elements 2 radially emit light L downward. That is, the light emitting elements 2 that constitute the first light source 2a and the second light source 2b are provided on the same one surface of the same circuit board 4 and emit light L in the same direction.

Further, while the configuration in which the LEDs that constitute the light emitting elements 2 and the driving circuit configured to drive the LEDs are mounted on the circuit board 4 is provided in the embodiment, a configuration in which the mounting board on which the LEDs are mounted and the circuit board on which the driving circuit configured to drive the LEDs is provided are separately disposed, the mounting board and the circuit board are electrically connected via a wiring cord referred to as a harness, and the driving circuit is protected from heat emitted from the LEDs may be provided.

The light guide body 30 (an inner lens 30A) is formed of, for example, a transparent resin such as poly carbonate, acryl, or the like, or a light transmissive member such as glass or the like. The light guide body 30 has a shape symmetrical with respect to the center axis AX of the first light source 2a and the second light source 2b while being curved between the substantially flat plate-shaped first light guide part 3a extending in the forward/rearward direction and the substantially flat plate-shaped second light guide part 3b extending in the upward/downward direction. In addition, the first light guide part 3a constitutes a portion that connects the light guide bodies 30 that constitute each of the light emitting units 40 in one direction.

The light guide body 30 has a first incidence part 31a and a second incidence part 31b disposed on an upper portion of the first light guide part 3a on a rear end side, a first reflection surface 32 disposed on a rear end of the first light guide part 3a, a second reflection surface 33 disposed between a front end of the first light guide part 3a and an upper end of the second light guide part 3b, a first reflection part 34a and a second reflection part 34b disposed on both side surfaces of the second light guide part 3b in the widthwise direction, a plurality of reflection cuts 35 of the second light guide part 3b disposed on a back face side, and a light emission part 36 disposed in front of the second light guide part 3b.

The plurality of (in the embodiment, four) first incidence parts 31a and second incidence parts 31b are disposed to be arranged in one direction to face the plurality of light emitting elements 2 that constitute the first light source 2a and the second light source 2b.

The first incidence part 31a and the second incidence part 31b have a lens shape through which light L emitted radially from the first light source 2a and the second light source 2b enters the first light guide part 3a while being parallelized or condensed. Accordingly, the light L entering from the first incidence part 31a and the second incidence part 31b is guided inside the first light guide part 3a toward the first reflection surface 32 located below.

Further, the first incidence part 31a and the second incidence part 31b are not necessarily limited to the above-mentioned lens shape, and for example, a configuration in which a flat (planar) incidence surface is provided to cause light L to enter the first light guide part 3a from the incidence surface may be provided.

The first reflection surface 32 is provided to extend in the widthwise direction of the first light guide part 3a and to be inclined toward the front end of the first light guide part 3a at a predetermined angle (in the embodiment, 45°). Accordingly, the first reflection surface 32 reflects the light L entering from the first incidence part 31a and the second incidence part 31b toward the second reflection surface 33 on the front side. That is, the light L reflected by the first reflection surface 32 is guided inside the first light guide part 3a toward the second reflection surface 33 on the front side.

The second reflection surface 33 is provided to extend in the widthwise direction of the first light guide part 3a and to be inclined toward the lower end side of the second light guide part 3b at a predetermined angle (in the embodiment, 45°). Accordingly, the second reflection surface 33 reflects the light L guided inside the first light guide part 3a toward the second light guide part 3b located on the lower side. That is, the light L reflected by the second reflection surface 33 is guided inside the second light guide part 3b toward the first reflection part 34a and the second reflection part 34b located on the lower side.

The first reflection part 34a and the second reflection part 34b are constituted by a reflection surface on which both side surfaces of the second light guide part 3b facing each other are inclined by gradually reducing the width of the second light guide part 3b toward the lower part of the second light guide part 3b.

That is, the first reflection part 34a and the second reflection part 34b are disposed so as to face each other on both side surfaces of the second light guide part 3b in a direction perpendicular to the first incidence part 31a and the second incidence part 31b. Accordingly, the first reflection part 34a crosses with respect to the light L entering from the first incidence part 31a. Meanwhile, the second reflection part 34b crosses with respect to the light L entering from the second incidence part 31b.

Accordingly, the first reflection part 34a and the second reflection part 34b reflect the light L guided toward the lower part of the second light guide part 3b in the widthwise direction of the second light guide part 3b. That is, the first reflection part 34a and the second reflection part 34b reflect the light L entering from the first incidence part 31a and the light L entering from the second incidence part 31b in facing directions with respect to each other.

In addition, the first reflection part 34a and the second reflection part 34b control the reflection direction of the light L reflected in the widthwise direction of the second light guide part 3b using a plurality of reflection cuts 34c provided on both side surfaces (reflection surfaces) of the second light guide part 3b.

The plurality of reflection cuts 34c are configured by periodically arranging groove portions, which have substantially V-shaped cross sections cutout in the forward/rearward direction (thickness direction) of the second light guide part 3b, in the upward/downward direction of both side surfaces of the second light guide part 3b.

Further, the plurality of reflection cuts 34c can be provided over part or all of both side surfaces of the second light guide part 3b. In addition, the plurality of reflection cuts 34c may be omitted in some cases. In this case, the reflection direction of the light L may be controlled according to shapes of both inclined side surfaces of the second light guide part 3b.

The plurality of reflection cuts 35 are provided in a reflection region P corresponding to the display pattern of "O" in the back face of the second light guide part 3b. At inside the reflection region P, the plurality of reflection cuts 35 are configured by periodically arranging groove portions, which have substantially V-shaped cross sections cutout in the upward/downward direction of the second light guide part 3b, in the leftward/rightward direction (widthwise direction) of the second light guide part 3b.

Accordingly, the plurality of reflection cuts 35 reflect the light L reflected by the first reflection part 34a and the second reflection part 34b toward the side in front of the second light guide part 3b. That is, the plurality of reflection cuts 35 reflect the light L entering the reflection region P corresponding to the display pattern of "O" toward the side in front of the second light guide part 3b.

The light emission part 36 is constituted by an end surface 37a of a protrusion 37 where a part of the second light guide part 3b on the front side protrudes forward in a shape corresponding to the display pattern of "O." In addition, the second light guide part 3b has a hole portion 37b inside the protrusion 37.

The light emission part 36 emits the light L reflected by the plurality of reflection cuts 35 from the end surface 37a of the protrusion 37 to the outside of the second light guide part 3b. Accordingly, it is possible to cause the end surface 37a of the protrusion 37 to emit red light as a light emitting surface having a shape corresponding to the display pattern of "O."

Accordingly, like the display pattern corresponding to "O," even when the hollow display pattern in which the hole portion 37b is formed is displayed therein, light can be uniformly emitted from the light emitting surface having a shape corresponding to the hollow display pattern without disposing parts such as a separate light source or the like on the other side in the upward/downward direction of the light guide body 30 by using the light L from the first light source 2a and the second light source 2b disposed on one side in the upward/downward direction of the light guide body 30.

As shown in FIG. 1, FIG. 2 and FIG. 3, the bezel 50 has a first bezel member 5A disposed on a front surface side of the inner lens 30A (the light guide body 30), a second bezel member 5B disposed on a back surface side of the inner lens 30A (the light guide body 30), and a third bezel member 5C disposed on an upper surface side of the inner lens 30A (the light guide body 30).

The first bezel member 5A, the second bezel member 5B and the third bezel member 5C are constituted by colored (for example, black) light shielding members and accommodates the plurality of light emitting units 40 therein by assembling them. Further, the shape of the bezel 50 may be appropriately changed according to a design or the like of the vehicle.

The first bezel member 5A has a plurality of (in the embodiment, five) opening portions 51 opened in shapes corresponding to the plurality of display patterns (HELLO), respectively. The first bezel member 5A is disposed to cover surroundings of the protrusion 37 by disposing the protrusion 37 inside the opening portions 51 such that the end surface 37a of the protrusion 37 faces the outside from the opening portions 51.

The second bezel member 5B has a protrusion 52 protruding forward in a shape corresponding to the hole portion 37b. The second bezel member 5B is disposed to cover the inside of the hole portion 37b by causing the end of the protrusion 52 to face the outside from the hole portion 37b.

The third bezel member 5C covers an upper surface and both side surfaces of the inner lens 30A (the light guide body 30), and has an opening portion 53 that opens in a shape corresponding to the first bezel member 5A on the front side.

Accordingly, the bezel 50 shields the light L emitted from the plurality of light emitting units 40 corresponding to the plurality of display patterns (HELLO), respectively, except the end surface 37a of the protrusion 37.

In the display device 10 for a vehicle of the embodiment having the above-mentioned configuration, as shown in FIG. 1, the plurality of light emitting units 40 can emit red light in shapes corresponding to the plurality of display patterns (HELLO), respectively.

In the display device 10 for a vehicle of the embodiment, even when the hollow display pattern having the hole portion 37b therein is displayed like the display pattern corresponding to the above-mentioned "O," the hollow display pattern can be more uniformly emitted, and the display pattern except the "O" can also more uniformly emitted.

Accordingly, in the display device 10 for a vehicle of the embodiment, appearance of the plurality of display patterns (HELLO) in the display area E upon emission can be improved.

Further, the present invention is not necessarily limited to the embodiment, and various modifications may be made without departing from the scope of the present invention.

For example, in the light emitting unit 40, while the configuration in which the light L emitted downward from the first light source 2a and the second light source 2b (the light emitting elements 2) mounted on the circuit board 4 enters the first light guide part 3a from the first incidence part 31a and the second incidence part 31b disposed on the upper portion of the first light guide part 3a on the rear end side is provided, it is not particularly limited to the above-mentioned configuration. For example, a configuration in which the light L emitted forward from the first light source 2a and the second light source 2b (the light emitting elements 2) mounted on the circuit board 4 enters the first light guide part 3a from the first incidence part 31a and the second incidence part 31b disposed on the rear end side of the first light guide part 3a may be provided.

Further, for example, while letters, numerical characters, logo marks, characters, or the like, can be exemplified as the display pattern, these are not particularly limited. In addition, it is not limited to the configuration in which the one light emitting unit 40 displays one display pattern, and a configuration in which the one light emitting unit 40 displays the plurality of display patterns may be provided.

Further, while the configuration in which the first bezel member 5A and the second bezel member 5B (the bezel 50) configured to cover surroundings of the protrusion 37 of the light emission part 36 and the inside of the hole portion 37b are disposed is provided in the embodiment, it is not particularly limited to the configuration. For example, when the light emission part 36 is flat and does not protrude, a configuration in which the bezel is disposed to cover surroundings of the light emitting surface of the light emission part 36 that emits light in a shape corresponding to the display pattern may be provided.

In addition, while the case in which the present invention is applied to the display device 10 for a vehicle mounted on the back gate or the trunk lid on the rear of the vehicle has been exemplified in the embodiment, the present invention may be applied to the display device 10 for a vehicle mounted on the front of the vehicle such as a front grill or the like.

In addition, the first light source 2a and the second light source 2b may also use the light emitting elements 2 such as a laser diode (LD) or the like, in addition to the above-mentioned LED. In addition, the color of the light emitted from the light emitting elements 2 is not limited to the above-mentioned red light and may be appropriately changed to white light or the like according to the display pattern. While preferred embodiments of the invention have been described and illustrated above, it should be understood that these are exemplary of the invention and are not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. A display device for a vehicle comprising:
a light source part including a first light source and a second light source; and
a light guide body including a light guide part configured to guide light emitted from the first light source and the second light source,
wherein the light guide body has a first incidence part and a second incidence part that are disposed to face the first light source and the second light source, respectively, and that are configured to cause the light emitted from the first light source and the second light source to enter the light guide part,
a first reflection part and a second reflection part that are disposed on both side surfaces facing each other in a direction perpendicular to the first incidence part and the second incidence part of the light guide part and that are configured to reflect light entering from the first incidence part and light entering from the second incidence part in facing directions with respect to each other,
a plurality of reflection cuts that are disposed on a back face side of the light guide part and that are configured to reflect the light reflected by the first reflection part and the second reflection part toward a front side of the light guide part, and
a light emission part that is disposed in the front side of the light guide part and that is configured to emit light in a shape corresponding to a display pattern formed by the plurality of reflection cuts by emitting the light reflected by the plurality of reflection cuts to outside.

2. The display device for a vehicle according to claim 1, wherein the light emission part is constituted by an end surface of a protrusion in which a part of the front side of the light guide part is protruding forward in a shape corresponding to the display pattern.

3. The display device for a vehicle according to claim 1, comprising a bezel that is disposed at the front side of the light guide body and that is configured to cover surroundings of the light emission part.

4. The display device for a vehicle according to claim 2, comprising a first bezel member that is disposed at the front side of the light guide body and that is configured to cover surroundings of the protrusion.

5. The display device for a vehicle according to claim 2 or 4, wherein the light guide part has a hole portion at inside the protrusion.

6. The display device for a vehicle according to claim 5, comprising a second bezel member that is disposed on a back face side of the light guide body and that is configured to cover inside of the hole portion.

7. The display device for a vehicle according to any one of claims 1 to 6, comprising a display area constituted by arranging the plurality of display patterns in one direction,
wherein the display area includes a plurality of light emitting units including the light source parts and the light guide bodies corresponding to each of the display patterns,
wherein the plurality of light emitting units are arranged in the one direction and have a structure in which the light guide bodies disposed next to each other are connected.
